# EUROPEAN PATENT SPECIFICATION

(11) **EP 3 280 308 B1**
(45) Date of publication and mention of the grant of the patent: **24.06.2020**
(21) Application number: 16715774.2
(22) Date of filing: 01.04.2016
(51) Int. Cl.: A47L 15/24, A47L 15/42, A47L 15/00

(54) **CONVEYOR DISHWASHER AND METHOD FOR OPERATING A CONVEYOR DISHWASHER**
FÖRDERBANDARTIGER GESCHIRRSPÜLER UND VERFAHREN FÜR DEN BETRIEB EINES FÖRDERBANDARTIGEN GESCHIRRSPÜLERS
LAVE-VAISSELLE À BANDE TRANSPORTEUSE ET PROCÉDÉ DE FONCTIONNEMENT D'UN LAVE-VAISSELLE À BANDE TRANSPORTEUSE

(30) Priority: 09.04.2015 DE 102015206337
(43) Date of publication of application: 14.02.2018
(73) Proprietor: Illinois Tool Works Inc., Glenview, IL 60025 (US)
(72) Inventor: DISCH, Harald, 79215 Elzach (DE); SCHREMPP, Martin, 77781 Biberach (DE)
(74) Representative: Trinks, Ole
(86) International application number: PCT/US2016/025505
(87) International publication number: WO 2016/164262

(56) References cited:
- EP-A2- 2 108 299
- DE-A1-102011 086 593
- GB-A- 584 112
- US-A1- 2010 024 844

## Description

### TECHNICAL FIELD

The present invention relates to a conveyor dishwasher having a conveyor apparatus for conveying washware through the individual treatment zones of the conveyor dishwasher, wherein the conveyor dishwasher has at least one wash zone in which wash liquid from a wash tank associated with the wash zone is sprayed onto the washware. The generic conveyor dishwasher further has, arranged behind the at least one wash zone as seen in the direction of conveying the washware, at least one final rinse zone in which final rinse liquid is sprayed onto the washware.

### BACKGROUND

A conveyor dishwasher according to the present invention is in particular a conveyor belt dishwasher or a rack conveyor dishwasher.

A conveyor dishwasher of the type mentioned at the outset is known in principle from the prior art and is conventionally used in the commercial sector. Unlike so-called programmable units, in which the washware to be cleaned remains stationary in the dishwasher during cleaning, in the case of conveyor dishwashers the washware is conveyed through different treatment zones of the conveyor dishwasher.

Conventionally, a conveyor dishwasher has as the treatment zones at least one pre-wash zone and at least one main wash zone, which is arranged after the pre-wash zone(s), as seen in the direction of conveying the washware. At least one final rinse zone is typically arranged after the main wash zones(s), as seen in the conveying direction.

It is also known to provide, between the main wash zone and the final rinse zone, in addition at least one post-wash zone or pre-rinse zone. As seen in the direction of conveying the washware, the washware, which is either received directly on a conveyor belt or is held in wash racks, conventionally passes through an entry tunnel, the subsequent pre-wash zones(s), main wash zone(s), any provided post-wash zone(s), final rinse zone(s) and a drying zone and into an exit section.

In each case, a wash system is associated with the said wash zones (pre-wash zone, main wash zone and any provided post-wash zone) of the conveyor dishwasher, and said wash system has a wash pump and a line system that is connected to the wash pump and by means of which wash liquid is supplied to corresponding spray nozzles of the wash zones. In the respective wash zone, the wash liquid supplied to the spray nozzles is sprayed onto the washware, which is conveyed through the respective wash zones by a conveyor apparatus of the conveyor dishwasher.

A wash tank is associated with each wash zone, and in said wash tank sprayed liquid is received and/or in this wash tank liquid for the spray nozzles of the relevant zones is provided.

In the conveyor dishwashers that are known from the prior art, final rinse liquid is sprayed onto the washware by means of the spray nozzles of the final rinse zone in the form of fresh water, which may be pure or may have further additives, such as rinse aid, added to it. At least a portion of the sprayed final rinse liquid is conveyed, by means of a cascade system, from one treatment zone to another in the opposite direction to the direction of conveying the washware.

The sprayed final rinse liquid is collected in a tank (post-wash tank) of the post-wash zone, from which it is conveyed, by means of the wash pump of the wash system that is part of the post-wash zone, to the spray nozzles (post-wash nozzles) of the post-wash zone. In the post-wash zone, wash liquid is rinsed off the washware. The liquid which is produced during this flows into the wash tank of the at least one main wash zone, which is upstream of the post-wash zone, as seen in the direction of conveying the washware. Here, the liquid is conventionally provided with a detergent and is sprayed onto the washware by a pump system (wash pump system) that is part of the wash system of the main wash zone, by means of the nozzles (wash nozzles) of the main wash zone.

From the wash tank of the main wash zone - where no further main wash zone is provided - the liquid then flows into the pre-wash tank of the pre-wash zone. The liquid in the pre-wash tank is sprayed onto the washware by means of a pump system that is part of the wash system of the pre-wash zone, by means of the pre-wash nozzles of the pre-wash zone, in order to remove large pieces of dirt from the washware.

In the commercial dishwashing sector, there are various standards and regulations in which the requirements of performance regarding hygiene in cleaning processes and method checks thereof are defined. Common to all standards and regulations is the stipulation of minimum temperatures in the wash and/or rinse zones of the commercial dishwasher during the cleaning process. In this way, among other things an at least partial thermal disinfection of the washware is to be performed.

The requirements of the predetermined minimum temperatures in the relevant treatment zones of the conveyor dishwasher have the result that during operation of the commercial dishwasher relatively high quantities of energy have to be applied in order to heat the wash and rinse liquids to the required minimum temperatures. On the other hand, in the case of currently known conveyor dishwashers, up to 55% of the energy which is introduced during operation of the conveyor dishwasher is discharged as waste heat. This occurs among other things because, during operation of the conveyor dishwasher, clouds of steam (vapor) and moist warm air are necessarily produced, wherein in particular the clouds of steam have to be removed from the conveyor dishwasher, at least partly in the form of outgoing air, by means of an outgoing air system. In this context, the outgoing air system must be designed such that at least a large proportion of the outgoing air that is produced during operation of the conveyor dishwasher is removed to the outside from the room in which the conveyor dishwasher is set up in order to be able effectively to prevent the humidity of the air in the room in which it is set up (ambient air) from increasing to such an extent that undesired condensation of water vapor is produced, in particular on cool surfaces in the room in which it is set up. In this context, it must be ensured that, depending on the conveyor dishwasher, a quantity of outgoing air of 150 to 800 m³/h that has to be removed is produced for each dishwasher.

Document GB 584 112 A discloses a dish washing machine comprising at least one dish washing compartment and a rinsing or final compartment adapted to be passed by dish baskets, which dish baskets run on a track, with at least one heat exchanger for indirect transmission of heat contained in the rinsing water to the washing water circulating in the washing compartment.

It is already known, from the printed specification DE 10 2011 086 593 A1, that a heat exchanger unit having a heat exchanger that is cooled with water, in particular fresh water, can be associated with the outgoing air system of a conveyor dishwasher in order to transfer thermal energy, from at least a portion of the outgoing air that is to be removed from the conveyor dishwasher by means of the outgoing air system, to the cooling water of the heat exchanger associated with the outgoing air system and hence to reduce the heat losses occurring during operation of the conveyor dishwasher.

Even though at least a portion of the thermal energy of the outgoing air to be removed from the dishwasher can be recovered by this measure, one must consider the fact that up to approximately 30% of the energy that is introduced for operation of a commercial conveyor dishwasher is discharged to the wastewater as heat losses. In a typical conveyor dishwasher, the energy lost through the wastewater - depending on the configuration of the dishwasher, and the size - is approximately 5 to 15 kWh per hour of running time. In this context, the wastewater is typically at a temperature of 40 to 75°C, depending on the configuration of the dishwasher, and the type.

Unlike the situation with programmable units, such as hood or under-counter dishwashers, hitherto no technology has been available by means of which the energy of the wastewater in a conveyor dishwasher can be efficiently recovered by suitable heat exchanger systems and can be returned to the dishwasher again by, for example, heating up the required final rinse liquid.

This is primarily because of the continuous operation of conveyor dishwashers, by comparison with the batch processing of stationary programmable units: unlike the situation with programmable units, in which with each program cycle the same quantity of wastewater occurs as final rinsing fresh water, in the case of conveyor dishwashers with certain operating cycles there is no wastewater at all or a smaller quantity of wastewater than the fresh water that is simultaneously required as final rinse liquid for the final rinse.

If for example the conveyor dishwasher is shifted from a standstill to an operating mode, then although the conveyor dishwasher requires fresh water straight away for the final rinse there is at this time no wastewater available yet from which at least a portion of the thermal energy can be recovered in order to heat up the fresh water required for the final rinse. This is because, when the conveyor dishwasher starts up, first the wash systems and wash lines are filled with wash liquid. This wash liquid, which is required for filling the wash systems and wash lines, is taken from the corresponding wash tank of the corresponding wash zone, such that the level of wash liquid in the corresponding wash tank necessarily falls. Consequently, at least for the initial period after the conveyor dishwasher is started up, no wastewater that can be used for heating the final rinse liquid by means of a heat exchanger device is produced. To be more precise, no wastewater flows away by means of a corresponding wastewater overflow until the wash tanks or the first wash tank, as seen in the direction of conveying the washware, has been completely filled up or topped up.

Taking this problem as a starting point, an object of the invention is to further develop a conveyor dishwasher of the type mentioned at the outset such that during operation of the conveyor dishwasher resources, in particular energy, can be saved without having a negative effect on the cleaning result and the efficiency of the conveyor dishwasher.

A further object of the present invention is to specify a corresponding method for operating a conveyor dishwasher.

### SUMMARY

The invention relates to a conveyer dishwasher as defined by independent claim 1 and a method for operating such a conveyer dishwasher as defined by independent claim 9, whereas further developments of the dishwasher and the method are provided in the sub-claims, respectively.

Accordingly, in the case of a conveyor dishwasher of the type mentioned at the outset, according to the invention it is in particular required that it has a wastewater pump for supplying wash liquid as required to a heat exchanger device in which at least a portion of the thermal energy of the supplied wash liquid is transferred to the final rinse liquid, which is to be sprayed in the final rinse zone.

Here, the invention is based on the realization that up to approximately 30% of the energy that is introduced during operation of the conveyor dishwasher is transferred to the wastewater as heat losses. By providing a corresponding heat exchanger device to which wash liquid, and in particular the wash liquid that is produced as wastewater during operation of the conveyor dishwasher, is supplied as required, it is possible to recover at least a portion of the thermal energy in the wastewater and to use it for heating the final rinse liquid, which is to be sprayed in the final rinse zone. In this way, during operation of the conveyor dishwasher resources can be saved without this having an effect on the cleaning performance or the cleaning quality of the conveyor dishwasher.

Unlike the situation with programmable units, in which with each program cycle the same quantity of wastewater is produced consistent with final rinsing liquid required, in the case of conveyor dishwashers, by contrast, with certain operating cycles no wastewater is produced, even though, depending on the loading condition, fresh water may be required at any time as final rinse liquid for the purpose of the final rinse.

For this reason, in a preferred further development of the conveyor dishwasher according to the invention, it is provided for it to be provided with a control device which is designed to drive the wastewater pump depending on a quantity of final rinse liquid which is currently in fact required and/or a quantity of wastewater which is produced during operation of the conveyor dishwasher. For example, the control device is designed to drive the wastewater pump appropriately, depending on a liquid level in the wash tank and/or depending on a predefined event and/or depending on an operating cycle and/or operating state of the conveyor dishwasher.

If for example the conveyor dishwasher is shifted from a standstill to an operating mode, then although the conveyor dishwasher requires fresh water straight away as final rinse water for the final rinse, at this time no wastewater is produced yet which is available for the purpose of heat recovery. As already stated at the outset, this is because, when the conveyor dishwasher starts up, first the wash systems and wash lines are filled with wash liquid, with the result that depending on the quantity of final rinse liquid that is supplied per unit time a certain period is needed to re-fill the wash tanks. For this reason, in the advantageous further development of the solution according to the invention, it is provided for the control device actually to switch on the wastewater pump only when, during operation of the conveyor dishwasher, wastewater that can be used for recovery thereof is produced.

In a further development of the last-mentioned embodiment, it is provided in particular for the control device of the conveyor dishwasher to be designed to switch off the wastewater pump by means of which the wash liquid that is produced as wastewater during operation of the conveyor dishwasher is supplied to the heat exchanger device, preferably automatically, when the liquid level in the wash tank falls below a predefined or predefinable level, and to switch on the wastewater pump again, preferably automatically, as soon as the liquid level in the wash tank again exceeds a predefined or predefinable second level, wherein the first level preferably corresponds to the second level. This is a particularly easily realizable and yet effective way of switching the wastewater pump on and off in dependence on whether during operation of the conveyor dishwasher any wash liquid at all is produced as wastewater.

In this context, it is in particular conceivable to provide the wash tank with a corresponding level sensor by means of which the current liquid level in the wash tank can be detected, preferably continuously. Depending on the current liquid level, a decision is then taken in the control device on whether wash liquid is being produced as wastewater and whether this wash liquid can be supplied to the heat recovery device.

In a further development of the last-mentioned embodiment, the control device is in particular designed to determine the quantity of wash liquid required as wash liquid per unit time and to estimate the anticipated quantity of wastewater produced per unit time and, in dependence thereon, to regulate accordingly the quantity of wastewater that is supplied per unit time to the heat recovery device with the aid of the wastewater pump, such that a sufficient quantity of wash liquid for the wash process to be performed in the wash zone is always available in the wash tank.

In a particularly preferred further development of the conveyor dishwasher according to the invention, it is provided for the control device to be designed to initiate, as required, hot water preparation, which is independent of the heat exchanger device, of the final rinse liquid which is to be sprayed in the final rinse zone. In this context, the term "as required" means in particular when it is detected that the thermal energy which is transferred to the final rinse liquid, which is to be sprayed in the final rinse zone, in the heat exchanger device is not sufficient to heat the final rinse liquid to a predefined or predefinable minimum temperature, and/or when it is detected that no wash liquid is supplied to the heat exchanger device, and/or when it is detected that the quantity of wash liquid which is supplied to the heat exchanger device per unit time is not sufficient to heat the final rinse liquid to the predefined or predefinable minimum temperature. In these cases, the control device preferably automatically initiates hot water preparation, which is independent of the heat exchanger device, of the final rinse liquid which is to be sprayed in the final rinse zone, in order to achieve a situation in which the final rinse liquid which is actually sprayed in the final rinse zone is at the predefined or predefinable minimum temperature, with the result that the hygiene requirements are accordingly met.

In this context, it is in particular conceivable for the hot water preparation, which is independent of the heat exchanger device, to be performed with the aid of a hot water preparation apparatus such as a boiler, wherein this hot water preparation apparatus is preferably a constituent forming part of the conveyor dishwasher. For example, it is conceivable for the hot water preparation apparatus to be designed to heat up the final rinse liquid which is to be sprayed in the final rinse zone to the predefined or predefinable minimum temperature using electrical energy, steam, a heat pump, gas or hot water.

As an alternative or in addition thereto, it is, however, also conceivable for the hot water preparation, which is to be carried out as required, of the final rinse liquid which is to be sprayed in the final rinse zone to be performed outside the conveyor dishwasher. It is conceivable in this case for example to provide an external hot water preparation apparatus, for example in the form of a hot water supply that is centralized (within the building). Thus, in this case the conveyor dishwasher may form or be able to form a flow connection with said external hot water preparation apparatus by means of a corresponding hot water connection, in order to supply, as required, hot water as the final rinse liquid which is to be sprayed in the final rinse zone. The control device, which is part of the conveyor dishwasher, should in this context be designed to activate the hot water connection as required, when the thermal energy which is transferred to the final rinse liquid, which is to be sprayed in the final rinse zone, in the heat exchanger device is not sufficient to heat the final rinse liquid to a predefined or predefinable minimum temperature, and/or when no wash liquid is supplied to the heat exchanger device, and/or when the quantity of wash liquid which is supplied to the heat exchanger device per unit time is not sufficient to heat the final rinse liquid, which is to be sprayed in the final rinse zone, to the predefined or predefinable minimum temperature.

In a preferred realization of the conveyor dishwasher according to the invention, it is provided for the conveyor dishwasher to have a wash system which is associated with the at least one wash zone and has at least one wash pump and wash nozzles, wherein wash liquid from the wash tank can be supplied to the wash nozzles with the aid of the at least one wash pump, and wherein the wash liquid which is sprayed in the at least one wash zone by the wash nozzles at least partially flows back into the wash tank again due to gravity. In other words, in this preferred realization of the conveyor dishwasher according to the invention, it is provided for the wash liquid to recirculate in the at least one wash zone.

According to one aspect of the present invention, the intake end of the wastewater pump forms a direct flow connection with the wash tank in order to supply the wash liquid, which is produced as wastewater, as required to the heat exchanger device. As stated above in this context, here the conveyor dishwasher should also be provided, in addition to the heat exchanger device, with hot water preparation which operates independently thereof, for example in the form of a hot water preparation apparatus (boiler) that is part of the conveyor dishwasher, in order to be able to ensure that there is sufficient heating of the final rinse liquid which is to be sprayed in the final rinse zone, at least when no wash liquid is supplied to the heat exchanger device.

As an alternative to the above-mentioned embodiment in which the intake end of the wastewater pump forms a direct flow connection with the wash tank, it is conceivable for the conveyor dishwasher to have an auxiliary tank which forms a flow connection with the wash tank in particular by means of an overflow or by means of a bypass line, wherein the intake end of the wastewater pump forms a direct flow connection with the auxiliary tank. The auxiliary tank should in particular serve as a buffer reservoir in order as required to provide interim storage of the wastewater which is produced in the wash zone and is to be removed from the wash zone or the wash tank of the wash zone.

In particular, the wash liquid which is subject to (interim) storage in the auxiliary tank and has been produced in the wash zone as wastewater no longer serves as recirculated wash liquid. In other words, the wash system of the at least one wash zone, and in particular the at least one wash pump of the wash system, does not form a flow connection with the auxiliary tank.

In this embodiment, in which an auxiliary tank that is arranged before the wash tank of the (first) wash zone of the conveyor dishwasher, as seen in the direction of conveying the washware, is provided, in some circumstances there is no need to provide hot water preparation that is independent of the heat exchanger device, since appropriate dimensioning of the auxiliary tank enables it always to be ensured that a sufficient quantity of wastewater can be supplied to the heat exchanger device at any time and in any operating situation, in particular also directly during or after the conveyor dishwasher has started up, for the final rinse liquid which is to be sprayed in the final rinse zone to be raised to the predefined or predefinable minimum temperature.

In practice in this context, it has been found that a capacity of 10 to 50 liters is sufficient for the auxiliary tank in order that the conveyor dishwasher can be operated fully effectively without hot water preparation which is independent of the heat exchanger device, if the capacity of the wash tank is 20 to 200 liters.

The invention relates not only to a conveyor dishwasher of the above-mentioned type but also to a method for operating a conveyor dishwasher of this kind, wherein at least a portion of the wash liquid which is produced as wastewater is at least temporarily supplied to a heat exchanger device in which at least a portion of the thermal energy of the supplied wash liquid is transferred to the final rinse liquid which is to be sprayed in a final rinse zone of the conveyor dishwasher.

Exemplary embodiments of the conveyor dishwasher according to the invention will be described in more detail below with reference to the attached drawings.

### BRIEF DESCRIPTION OF THE DRAWINGS

FIG. 1 shows schematically a dishwasher which is designed in the form of a conveyor dishwasher, for the purpose of explaining the general construction and functioning;
FIG. 2 shows schematically a wash zone of an exemplary embodiment of the dishwasher according to the invention; and
FIG. 3 shows schematically a wash zone of a further exemplary embodiment of the conveyor dishwasher according to the invention.

### DETAILED DESCRIPTION

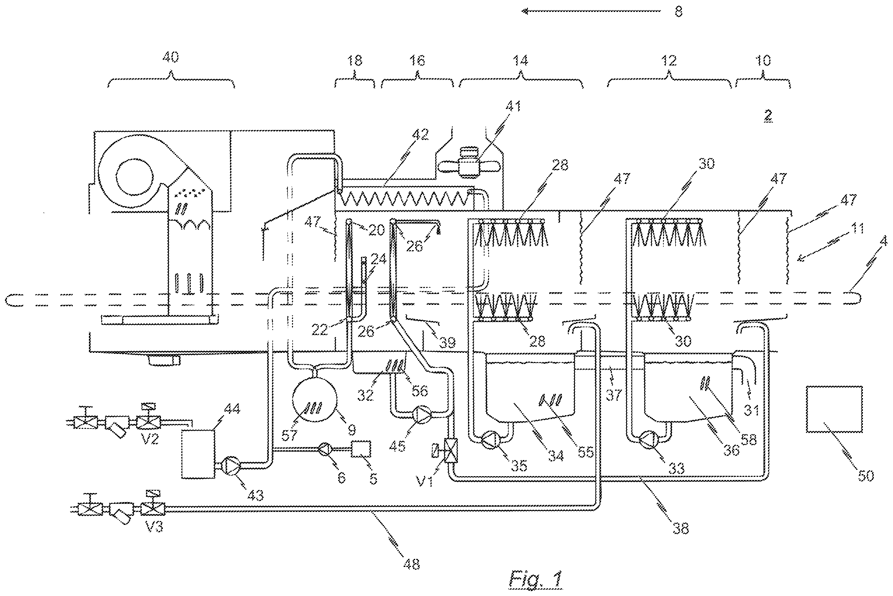

FIG. 1 shows a conveyor dishwasher 2 having a conveyor apparatus 4 for conveying washware (not illustrated) in a direction 8 of conveying through the conveyor dishwasher 2. The conveyor dishwasher 2 has at least one wash zone, for example as illustrated in FIG. 1, a pre-wash zone 12 and a main wash zone 14 which is arranged after the pre-wash zone 12, as seen in the direction 8 of conveying.

As seen in the direction 8 of conveying, after the at least one wash zone 12, 14 there is arranged an post-wash zone 16, and after the post-wash zone 16 there is arranged at least one final rinse zone, for example as illustrated only a single final rinse zone 18. In the conveyor dishwasher 2 that is illustrated schematically in FIG. 1, adjoining the final rinse zone 18, as seen in the direction 8 of conveying the washware, is a drying zone 40. The respective zones 12, 14, 16, 18, 40 of the conveyor dishwasher 2 may be separated from one another by means of parting curtains 47.

In the embodiment which is illustrated schematically in FIG. 1, the entry tunnel 10 is also itself separated from the entry 11 by means of a parting curtain 47. By providing the parting curtains 47, overspray of wash liquid and final rinse liquid and the emergence of vapor from the conveyor dishwasher 2 are prevented.

Associated with the said treatment zones 12, 14, 16, 18 of the conveyor dishwasher 2 are spray nozzles 20, 22, 24, 26, 28, 30. These spray nozzles 20, 22, 24, 26, 28, 30 serve to spray liquid onto the washware as the latter is conveyed through the respective treatment zones 12, 14, 16, 18 by the conveyor apparatus 4. The individual spray systems of the treatment zones 12, 14, 16, 18 ensure that the washware to be treated is sprayed from both the upper side and the underside.

In the conveyor dishwasher 2 which is illustrated schematically in FIG. 1, however, the final rinse zone 18 has not only downwardly directed upper spray nozzles 20 and upwardly directed lower spray nozzles 22 but also transversely directed lateral spray nozzles 24 on each side of the conveyor apparatus 4. The use of lateral spray nozzles 24 makes it possible to spray the washware surfaces (dish surfaces) with final rinse liquid in targeted manner even in zones that are hidden behind other objects. Specifically when the conveyor system is fully loaded, that is to say when the dish carrier is loaded with plates side by side, the use of lateral spray nozzles 24 in the final rinse zone 18 is clearly advantageous, in respect of the final rinse result (effective rinsing of detergent residues off dish surfaces even in hidden zones), over systems in which only upper and lower spray nozzles 20, 22 and no transversely directed lateral spray nozzles 24 are provided in the final rinse zone 18.

Further associated with the post-wash zone 16, main wash zone 14 and pre-wash zone 12 are tanks (post-wash tank 32, main wash tank 34, pre-wash tank 36), for receiving sprayed liquid and/or for providing liquid for the spray nozzles 26, 28, 30 of the relevant treatment zones 14, 16, 18.

In the conveyor dishwasher 2 which is illustrated schematically in FIG. 1, final rinse liquid, which is composed of fresh water and metered-in rinse aid, is sprayed onto the washware (not illustrated) by means of the spray nozzles 20, 22, 24 of the final rinse zone 18, said spray nozzles 20, 22, 24 being arranged above and below and to the side of the conveyor apparatus 4. A portion of the sprayed final rinse liquid is conveyed, by means of a cascade system, from one treatment zone to another in the opposite direction to the direction 8 of conveying the washware. The remaining portion of the final rinse liquid which is sprayed in the final rinse zone 18 is fed directly into the pre-wash tank 36 which is associated with the pre-wash zone 12, by means of a valve V1 and a bypass line 38.

In the cascade system, the final rinse liquid which is sprayed by the final rinse nozzles 20, 22, 24 flows by gravity from the final rinse zone 18 into the post-wash tank 32, which is associated with the post-wash zone 16. The final rinse liquid which is sprayed in the final rinse zone 18 and which is collected by the post-wash tank 33 is then conveyed to the spray nozzles (post-wash nozzles 26) of the post-wash zone 16 with the aid of a post-wash pump 45. In the post-wash zone 16, wash liquid is rinsed off the washware. The liquid which is produced during this (post-wash liquid) flows by gravity into the main wash tank 34, which is associated with the main wash zone 14. Preferably, a drain element 39, for example a draining board or a baffle plate, is provided for this purpose and guides the post-wash liquid which is sprayed by the post-wash nozzles 26 into the main wash tank 34.

According to another embodiment, which is not shown in the drawings, the drain element 39 can be dispensed with if the main wash tank 34 extends below the post-wash nozzles 26 of the post-wash zone 16.

The liquid which is received by the main wash tank 34 of the main wash zone 14 is conventionally provided with a detergent and is sprayed onto the washware with the aid of a main wash pump 35 by means of the spray nozzles (main wash nozzles 28) of the main wash zone 14. The wash liquid which is sprayed by the main wash nozzles 28 flows by gravity back into the main wash tank 34.

The main wash tank 34 forms a fluid connection with the pre-wash tank 36, which is associated with the pre-wash zone 12, by means of an overflow line 37. The wash liquid which is sprayed in the main wash zone 14 reaches the pre-wash tank 36 by means of said overflow line 37 when a sufficient quantity of wash liquid is received in the main wash tank 34.

The liquid which is received in the pre-wash tank 36 of the pre-wash zone 12 is then sprayed onto the washware with the aid of a pre-wash pump 33 by means of the spray nozzles (pre-wash nozzles 30) of the pre-wash zone 12, in order to remove large pieces of dirt from the washware. The wash liquid which is sprayed by the pre-wash nozzles 30 flows by gravity back into the pre-wash tank 36.

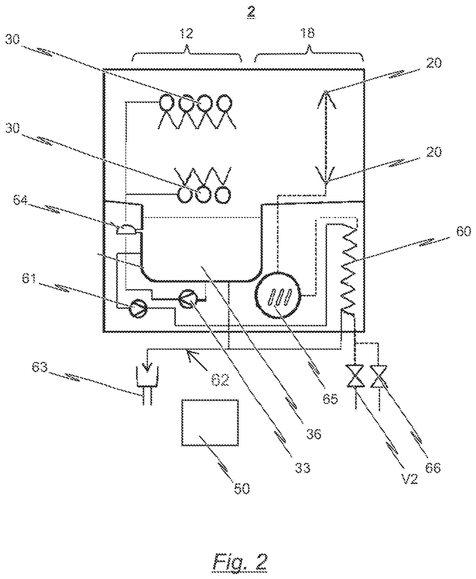

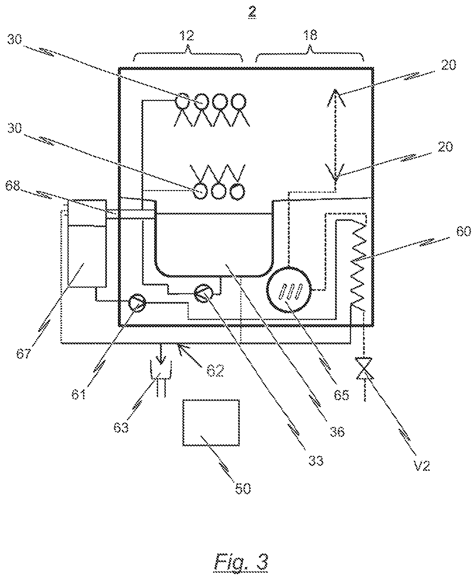

The pre-wash tank 36 is provided with an overflow line 31 which, when a liquid level in the pre-wash tank 36 is exceeded, serves to supply the excess quantity of liquid to a heating device as wastewater. This aspect is described in detail below with reference to the illustrations in FIGS. 2 and 3.

As indicated above, the liquid which is sprayed in the main wash zone 14 and the pre-wash zone 12 preferably contains detergent, which is metered for example into the liquid which is received in the main wash tank 34 of the main wash zone 14 with the aid of a detergent metering device (not shown in the drawings).

As mentioned above, the drying zone 40 follows the final rinse zone 18, as seen in the direction 8 of conveying the washware. In the drying zone 40, the washware is dried by means of dry warm air in order to blow away or dry off moisture which is on the washware. In order to keep the humidity of the air in a range that is favorable to drying, it is conceivable for example to supply indoor air to the drying zone 40 from the outside, by means of an opening, for example the exit opening for the washware.

The warm moist air in the drying zone 40 is then removed from the drying zone 40, for example with the aid of a fan 41, by means of a further opening. In this context, it is advantageous if the outgoing air passes out of the drying zone 40 and through a device 42 for heat recovery in which for example a condenser may be provided. The device 42 for heat recovery serves to recover at least a portion of the thermal energy in the outgoing flow.

If, before the conveyor dishwasher 2 is first started up, the tanks which are associated with the wash zones 12, 14 and 16 (pre-wash tank 36, main wash tank 34, post-wash tank 32) are empty or only insufficiently filled, they must first be filled by means of a fresh water line 48 and/or by spraying final rinse liquid in the final rinse zone 18. The fresh water line 48 is connectable to a fresh water mains supply by means of a controllable valve V3. The quantity of wash liquid which is available in the main wash zone 14 and the pre-wash zone 12 may be monitored, with the aid of a level sensor that is provided in the main wash tank 34 and with the aid of a level sensor that is provided in the pre-wash tank 36 respectively, and signaled to a control device 50.

As illustrated in FIG. 1, a fresh water container 44 may be associated with the final rinse zone 18, for the interim storage of at least a portion of the fresh water which is provided for the final rinse. The fresh water container 44 is provided on one side with a fresh water connection, which is connectable by means of a controllable fresh water supply valve V2 to a fresh water mains supply, and on the other is connected to the intake side of a final rinse pump 43. It goes without saying, however, that it is also conceivable to dispense with a fresh water container 44 for the interim storage of at least a portion of the fresh water which is provided for the final rinse, and to connect the fresh water supply valve V2 directly to the intake side of the final rinse pump 43.

Nor is it absolutely necessary to provide a final rinse pump 43. Rather, it is possible for example also to use the pressure from the fresh water mains network in order to supply the fresh water which is to be sprayed in the final rinse zone 18, as final rinse liquid, to the final rinse nozzles 20, 22, 24.

In the case of the conveyor dishwasher 2 which is illustrated schematically in FIG. 1, by contrast, a final rinse pump 43 is used, whereof the delivery side is connected by means of a line system to a water heater 9 ("boiler"). In this context, the line system is designed such that the liquid which is conveyed by the final rinse pump 43 to the spray nozzles 20, 22, 24 of the final rinse zone 18 first passes through the device 42 for heat recovery, in which at least a portion of the thermal energy from the outgoing air that is removed from the conveyor dishwasher is used to heat the liquid which is supplied to the spray nozzles 20, 22, 24 of the final rinse zone 18.

As an alternative or in addition thereto, it is provided for the liquid which is to be conveyed by the final rinse pump 43 to the spray nozzles 20, 22, 24 of the final rinse zone 18 to pass through a heat exchanger device 60 in which at least a portion of the thermal energy of the wastewater which is produced during operation of the conveyor dishwasher 2 and which is to be removed is transferred to the final rinse liquid which is to be sprayed in the final rinse zone 18. The construction and functioning of this heat exchanger device 60 are described in more detail below with reference to the embodiments according to FIGS. 2 and 3.

Rinse aid is metered into the fresh water which is supplied to the final rinse pump 43, either directly from the fresh water supply valve V2 or from the fresh water container 44, with the aid of a rinse aid metering device which has a rinse aid pump 6. Preferably, the rinse aid metering device is arranged such that the metering of rinse aid into the fresh water is performed at a location in which the fresh water has not yet been heated. Tests in this context have shown that a markedly better and more even mixing of the rinse aid with the fresh water is produced if the rinse aid is metered into unheated fresh water.

To be more precise, rinse aid should preferably be metered into fresh water which is at a temperature of less than 40°C, preferably less than 30°C.

Consequently, in the embodiment of the conveyor dishwasher 2 which is illustrated schematically in FIG. 1, the metering of rinse aid takes place between the final rinse pump 43 and the water heater 9, or between the device 42 for heat recovery and the heat exchanger device 60. In FIG. 1, the control device 50 of the conveyor dishwasher 2 is indicated only schematically. In the control device 50, preferably a plurality of predefined or predefinable running programs are stored. To this end, the control device 50 has a corresponding storage device, preferably a random access memory (RAM). Each individual running program defines the process parameters which have been laid down for the treatment of the washware in the various treatment zones of the conveyor dishwasher 2, which in particular includes the temperature, in particular the minimum temperature, of the wash liquid which is to be sprayed in the pre-wash zone 12, the wash liquid which is to be sprayed in the main wash zone 14, the liquid which is to be sprayed in the post-wash zone 16 and/or the final rinse liquid which is to be sprayed in the final rinse zone 18.

To this end, it is preferred if a corresponding heating device 55, 56, 58 is arranged in the pre-wash tank 36 which is associated with the pre-wash zone 12, in the main wash tank 34 which is associated with the main wash zone 14 and/or in the post-wash tank 32 which is associated with the post-wash zone 16, in order to bring to temperature the liquid which is collected in the relevant tank 32, 34, 36 in accordance with the stipulation of a selected running program. The said heating devices 55, 56, 58 are drivable accordingly by the control device 50.

Further, a heating device 57 of the water heater 9 is drivable appropriately by the control device 50 in order as required to adjust the temperature, in particular the minimum temperature, of the final rinse liquid which is to be sprayed in the final rinse zone 18, in the event that the final rinse liquid which is to be sprayed has not yet been sufficiently brought to temperature after passing through the device 42 for heat recovery and/or after passing through the heat exchanger device 60.

A first exemplary embodiment of a heat exchanger device 60 which is downstream of the pre-wash zone 12 will be described in more detail below with reference to the illustration in FIG. 2.

To be more precise, FIG. 2 schematically illustrates in more detail a first exemplary embodiment of a wastewater energy recovery system which is used for example with the conveyor dishwasher 2 which is illustrated schematically in FIG. 1 and described above. In this exemplary embodiment of the wastewater energy recovery system, a wastewater pump 61 is used which may be driven appropriately by means of the above-mentioned control device 50. The intake side of the wastewater pump 61 forms a flow connection with a wash tank of a wash zone of the conveyor dishwasher 2.

In the text below, it is assumed that the intake side of the wastewater pump 61 is connected to the wash tank 36 of the first wash zone, as seen in the direction 8 of conveying the washware (for example the pre-wash zone 12).

The wastewater pump 61 serves to supply, as required, wash liquid which is produced as wastewater during operation of the conveyor dishwasher 2 to the heat exchanger device 60, in which at least a portion of the thermal energy of the supplied wash liquid is transferred to the final rinse liquid which is to be sprayed in the final rinse zone 18. Although it is not illustrated in FIG. 2, it goes without saying that it is conceivable for further wash zones to be connected between the final rinse zone 18 and the wash zone 12, such as the main wash zone 14 and post-wash zone 16 described with reference to the illustration in FIG. 1.

As can also be seen from the illustration in FIG. 2, there is associated with the wash zone 12 a corresponding wash system, part of which is a wash pump (in this case, for example, the pre-wash pump 33) by means of which the wash liquid collected in the wash tank 36 is supplied to corresponding wash nozzles (in this case, for example, the pre-wash nozzles 30). The wash liquid which is sprayed in the wash zone 12 by the wash nozzles 30 at least partially flows back into the wash tank 36 again due to gravity. In this regard, the wash system shown in FIG. 2 is designed as a recirculation system.

It should be emphasized in particular in this context that - as indicated schematically in FIG. 2 - the intake side of the wastewater pump 61 forms a direct flow connection with the wash tank 36. The delivery side of the wastewater pump 61, by contrast, is connected to a corresponding heat exchanger device 60 in order, as required, to supply wash liquid from the wash tank 36 to the heat exchanger device 60.

The heat exchanger device 60 is preferably designed as a counterflow heat exchanger in order to transfer, in a particularly efficient manner, at least a portion of the thermal energy of the wash liquid which is supplied to the heat exchanger device 60 to the fresh (cold) water which is to be sprayed in the final rinse zone 18 as final rinse liquid, and to heat this fresh water accordingly.

After it has passed through the heat exchanger device 60, the wash liquid is then supplied to a wastewater network 63 by means of a wastewater line 62.

As indicated schematically in FIG. 2, the wash tank 36 of the wash zone 12 is provided with a level sensor 64, by means of which the liquid level in the wash tank 36 is preferably detected continuously or at predefined times or in the case of predefined events.

According to the invention, the control device 50 is designed to drive the wastewater pump 61 depending on a quantity of wastewater which is actually currently produced during operation of the conveyor dishwasher 2. In other words, if during operation of the conveyor dishwasher 2 no wastewater which is to be removed from the conveyor dishwasher 2 or the wash tank 36 of the wash zone 12 is produced, the control device 50 switches off the wastewater pump 61, preferably automatically, such that no wash liquid is supplied to the heat exchanger device 60.

In particular in the case of the exemplary embodiment of the wastewater energy recovery system that is illustrated in FIG. 2, it is provided for the control device 50 of the conveyor dishwasher 2 to be designed to drive appropriately, that is to switch on or off, the wastewater pump 61 depending on a liquid level in the wash tank 36, which is detected with the aid of a level sensor 64.

Instead of driving the wastewater pump 61 in dependence on a liquid level which is detected in the wash tank 36, it goes without saying, however, that it is also conceivable for the control device 50 to be designed to drive the wastewater pump 61 appropriately, depending on a predefined event and/or depending on an operating cycle and/or operating state of the conveyor dishwasher 2. The essential point here is that the wastewater pump 61 is only driven and switched on if wash liquid which is to be removed from the conveyor dishwasher 2 as wastewater, and which can thus be used for energy recovery in the heat exchanger device 60, is actually produced during operation of the conveyor dishwasher 2.

In the embodiment of the wastewater energy recovery system according to the invention which is illustrated schematically in FIG. 2, it is in particular provided for the control device 50 to switch off the wastewater pump 61, preferably automatically, when the liquid level in the wash tank 36, which is detected with the aid of the level sensor 64, falls below a predefined or predefinable first level, wherein the wastewater pump 61 is switched on again, preferably automatically, as soon as the liquid level in the wash tank 36 exceeds a predefined or predefinable second level, wherein said second level preferably corresponds to the above-mentioned first level. The first and/or second level at which the wastewater pump 61 is switched on and off is preferably selected such that it is ensured that a sufficient quantity of wash liquid is always present in the wash tank 36 to be able to carry out the wash process in the wash zone 12 in the conventional way.

As also schematically illustrated in FIG. 2, the wastewater energy recovery system shown there is further provided with a hot water preparation apparatus 65 which is designed such that it is independent of the heat exchanger device 60. By means of said hot water preparation apparatus 65, hot water of the final rinse liquid which is to be sprayed in the final rinse zone 18 is prepared, in particular when the thermal energy which is transferred to the final rinse liquid, which is to be sprayed in the final rinse zone 18, in the heat exchanger device 60 is not sufficient to heat the final rinse liquid to a predefined or predefinable minimum temperature when no wash liquid is supplied to the heat exchanger device 60 and/or when the quantity of wash liquid which is supplied to the heat exchanger device 60 per unit time is not sufficient to heat the final rinse liquid which is to be sprayed in the final rinse zone 18 to the predefined or predefinable minimum temperature.

A situation of this kind occurs for example when the wash system is started up, specifically when the liquid level in the wash tank 36 falls below a defined level (first level) and thus a condition is present in which no wash liquid can be removed from the conveyor dishwasher 2 as wastewater and thus no energy can be recovered from the wastewater in the heat exchanger device 60.

In this case, the required energy for heating the fresh water which is to be sprayed in the final rinse zone 18 as final rinse liquid to the required final rinse temperature has to be provided with the aid of hot water preparation which is independent of the heat exchanger device 60.

For this purpose, in the wastewater energy recovery system according to the embodiment illustrated schematically in FIG. 2, a hot water preparation apparatus 65 that is internal to the dishwasher is used. This hot water preparation apparatus 65 may be used in addition to the water heater 9 shown in FIG. 1, or instead of the water heater 9 shown there. In either case, the hot water preparation apparatus 65 is designed to heat up the final rinse liquid which is to be sprayed in the final rinse zone to the predefined or predefinable minimum temperature for the final rinse liquid using electrical energy, steam, gas or hot water.

As also illustrated schematically in FIG. 2, as an alternative or in addition to the hot water preparation apparatus 65 that is internal to the dishwasher, the hot water preparation that is to be undertaken as required may be performed by means of an external hot water preparation apparatus (not explicitly illustrated in FIG. 2). It is conceivable in this context for example for the conveyor dishwasher 2 to form a flow connection or to be able to form a flow connection with an external hot water preparation apparatus, for example a centralized hot water supply provided in the building, by means of a hot water connection 66, in order as required to supply the conveyor dishwasher 2 with hot water which serves to be sprayed in the final rinse zone 18 as the final rinse liquid, or which serves to heat the final rinse liquid which is to be sprayed in the final rinse zone 18, for example by means of a heat exchanger or heat pump system.

Preferably, in this case the control device 50 is designed to activate the hot water connection 66 when the thermal energy which is transferred to the final rinse liquid, which is to be sprayed in the final rinse zone 18, in the heat exchanger device 60 is not sufficient to heat the final rinse liquid to the predefined or predefinable minimum temperature, when no wash liquid is supplied to the heat exchanger device 60, and/or when the quantity of wash liquid which is supplied to the heat exchanger device 60 per unit time is not sufficient to heat the final rinse liquid which is to be sprayed in the final rinse zone 18 to the predefined or predefinable minimum temperature.

A further exemplary embodiment of a wastewater energy recovery system will be described in more detail below with reference to the illustration in FIG. 3. The wastewater energy recovery system which is illustrated schematically in FIG. 3 is suitable - as indeed is the wastewater energy recovery system shown in FIG. 2 - in particular for use in a wash zone, in particular the first wash zone, as seen in the direction of conveying the washware (pre-wash zone 12), in order to use the wash liquid that is produced as wastewater in this wash zone (pre-wash zone 12) for heat recovery.

Unlike the wastewater energy recovery system according to the schematic illustration in FIG. 2, however, in the case of the wastewater energy recovery system according to FIG. 3 it is provided for the intake side of the wastewater pump 61 not to form a direct flow connection with the wash tank 36 of the wash zone 12. Rather, in this case the intake side of the wastewater pump 61 forms or is able to form a flow connection with an auxiliary tank 67. This auxiliary tank 67 forms a flow connection with the wash tank 36 of the wash zone 12 by means of an overflow or similar bypass line, such that the wash liquid that is produced as wastewater in the wash zone 12 reaches the auxiliary tank 67 and is subject to interim storage there.

In this way, it is ensured that the wash liquid (wastewater) stored in the auxiliary tank 67 can no longer be recirculated in the wash zone 12, since - as already explained in conjunction with the embodiment according to FIG. 2 - the intake side of the wash pump 33 of the wash system associated with the wash zone 12 is connected to the wash tank 36.

The wastewater which is subject to interim storage in the auxiliary tank 67 is supplied, as required, with the aid of the wastewater pump 61 to a heat exchanger device 60 which is preferably designed as a counterflow heat exchanger and serves to transfer at least a portion of the thermal energy of the wash liquid which is supplied as wastewater to the heat exchanger device 60 to the final rinse liquid which is to be sprayed in the final rinse zone 18.

By providing an auxiliary tank 67 of this kind, it is ensured in particular that even when the conveyor dishwasher 2 is started up - that is, in a condition in which no wastewater which is to be removed and can be used for heat recovery is produced during operation of the conveyor dishwasher 2 - the heat exchanger device 60 can always be provided with wastewater from the auxiliary tank 67.

Nonetheless, it is, however, also advantageous in the case of the wastewater energy recovery system according to FIG. 3 to provide hot water preparation which is independent of the heat exchanger device 60, for example in the form of a hot water preparation apparatus 65, wherein in this case too the hot water preparation apparatus 65 which is illustrated schematically in FIG. 3 may be designed to have the same construction as the water heater 9 shown in FIG. 1, or the hot water preparation apparatus 65 which is illustrated schematically in FIG. 3 may replace the water heater 9 shown in FIG. 1.

The hot water preparation apparatus 65 is activated by the control device 50 at least when the thermal energy which is transferred to the final rinse liquid, which is to be sprayed in the final rinse zone 18, in the heat exchanger device 60 is not sufficient to heat the final rinse liquid to the predefined or predefinable minimum temperature.

As also in the case of the wastewater energy recovery system illustrated schematically in FIG. 2, in the case of the embodiment illustrated schematically in FIG. 3 it is provided for the hot water preparation apparatus 65 to be designed in particular to heat up the final rinse liquid which is to be sprayed in the final rinse zone 18 to the predefined or predefinable minimum temperature using electrical energy, steam, gas or hot water.

In the case of the wastewater energy recovery system shown in FIG. 3, too, a wastewater line 62 is used to supply the wash liquid which is removed as wastewater from the conveyor dishwasher 2 - once it has passed through the heat exchanger device 60 - to a wastewater network 63.

The invention is not restricted to the embodiments illustrated in the drawings but results from an overall view of all the features and aspects disclosed herein.

In particular, the wastewater energy recovery system according to the invention is designed to supply wash liquid, continuously or cyclically, to the heat exchanger device 60 with the aid of the wastewater pump 61. In this context, the temperature of the wash liquid, depending on the machine type and the selected treatment program, is between 40°C and 75°C. After flowing through the heat exchanger device 60, the wash liquid (wastewater) is cooled by approximately 20°C to 30°C, to approximately 20°C to 60°C.

The thermal energy is transferred to fresh water flowing in counterflow, with the result that said fresh water is heated by the same temperature difference as that by which the wastewater cools. Then, as required, the preheated fresh water is heated by a hot water preparation apparatus 65, such as a water heater 9, to the required process temperature of at least 65°C or at least 80°C.

In particular, in this context it is also conceivable to provide, in the wash tank 36, the wash water supply line to the heat exchanger device 60, and/or the final rinse liquid outlet or the downstream line for the fresh water that is heated or pre-heated in the heat exchanger device 60, corresponding temperature sensors so that the control device 50 can activate the wastewater pump 61 and/or the hot water preparation apparatus 65 and/or the hot water connection 66 appropriately.

## Claims

1. Conveyor dishwasher (2) having a final rinse zone (18) and at least one wash zone (12, 14, 16, 18) and also a conveyor apparatus for conveying washware through the treatment zones of the conveyor dishwasher (2), wherein the at least one wash zone (12, 14, 16, 18) has an associated wash tank (32, 34, 36) in which at least a portion of the wash liquid which is sprayed in the at least one wash zone (12, 14, 16, 18) is collected, wherein the conveyor dishwasher (2) has a wash system which is associated with the at least one wash zone (12, 14, 16, 18) and has at least one wash pump (33, 35, 45) and wash nozzles (26, 28, 30), wherein wash liquid from the wash tank (32, 34, 36) can be supplied to the wash nozzles (26, 28, 30) with the aid of the at least one wash pump (33, 35, 45), and wherein the wash liquid which is sprayed in the at least one wash zone (12, 14, 16, 18) by the wash nozzles (26, 28, 30) at least partially flows back into the wash tank (32, 34, 36) again due to gravity,
**characterized in that**
the conveyor dishwasher (2) has a wastewater pump (61) for supplying wash liquid, which is produced as wastewater during operation of the conveyor dishwasher (2), as required to a heat exchanger device (60) in which at least a portion of the thermal energy of the supplied wash liquid is transferred to the final rinse liquid which is to be sprayed in the final rinse zone (18), and **in that** the conveyor dishwasher (2) has an auxiliary tank (67) which forms a flow connection with the wash tank (32, 34, 36) by means of an overflow (68) or by means of a bypass line, such that the wash liquid that is produced as wastewater in the wash zone (12, 14, 16, 18) reaches the auxiliary tank (67) and is subject to interim storage there, wherein the intake end of the wastewater pump (61) forms a direct flow connection with the auxiliary tank (67).

2. Conveyor dishwasher (2) according to Claim 1,
wherein the conveyor dishwasher (2) has a control device (50) which is designed to drive the wastewater pump (61) depending on a quantity of final rinse liquid which is currently required per unit time and/or a quantity of wastewater which is produced during operation of the conveyor dishwasher (2) and/or depending on a liquid level of the auxiliary tank, or on a liquid level in at least one wash tank (32, 34, 36) of the conveyor dishwasher and/or depending on a predefined event and/or depending on an operating cycle and/or operating state of the conveyor dishwasher (2).

3. Conveyor dishwasher (2) according to Claim 1 or 2,
wherein the conveyor dishwasher (2) has a control device (50) which is designed to switch off the wastewater pump (61), preferably switch off said wastewater pump automatically, when the liquid level in the wash tank (32, 34, 36) falls below a predefined or predefinable first level, and to switch on the wastewater pump (61) again, preferably to switch on said wastewater pump again automatically, as soon as the liquid level in the wash tank (32, 34, 36) exceeds a predefined or predefinable second level, wherein the first level preferably corresponds to the second level.

4. Conveyor dishwasher (2) according to Claim 2 or 3,
wherein the control device (50) is designed to initiate, as required, hot water treatment, which is independent of the heat exchanger device (60), of the final rinse liquid which is to be sprayed in the final rinse zone (18), specifically in particular when:
i) the thermal energy which is transferred to the final rinse liquid, which is to be sprayed in the final rinse zone (18), in the heat exchanger device (60) is not sufficient to heat the final rinse liquid to a predefined or predefinable minimum temperature; and/or
ii) no wash liquid is supplied to the heat exchanger device (60); and/or
iii) the quantity of wash liquid which is supplied to the heat exchanger device (60) per unit time is not sufficient to heat the final rinse liquid to a predefined or predefinable minimum temperature.

5. Conveyor dishwasher (2) according to one of Claims 2 to 4,
wherein the conveyor dishwasher (2) has a boiler (9, 65) for heating, as required, the final rinse liquid which is to be sprayed in the final rinse zone (18), wherein the control device (50) is designed to activate the boiler (9, 65) when:
i) the thermal energy which is transferred to the final rinse liquid, which is to be sprayed in the final rinse zone (18), in the heat exchanger device (60) is not sufficient to heat the final rinse liquid to a predefined or predefinable minimum temperature; and/or
ii) no wash liquid is supplied to the heat exchanger device (60); and/or
iii) the quantity of wash liquid which is supplied to the heat exchanger device (60) per unit time is not sufficient to heat the final rinse liquid to a predefined or predefinable minimum temperature.

6. Conveyor dishwasher (2) according to Claim 5,
wherein the boiler (9, 65) is designed to heat up the final rinse liquid which is to be sprayed in the final rinse zone (18) to a predefined or predefinable minimum temperature using electrical energy, steam, a heat pump, gas or hot water.

7. Conveyor dishwasher (2) according to one of Claims 2 to 6,
wherein an external boiler is provided, the conveyor dishwasher (2) forming or being able to form a flow connection with the said external boiler by means of a hot water connection (66), for supplying, as required, hot water as the final rinse liquid which is to be sprayed in the final rinse zone (18), wherein the control device (50) is designed to activate the hot water connection (66) when:
i) the thermal energy which is transferred to the final rinse liquid, which is to be sprayed in the final rinse zone (18), in the heat exchanger device (60) is not sufficient to heat the final rinse liquid to a predefined or predefinable minimum temperature; and/or
ii) no wash liquid is supplied to the heat exchanger device (60); and/or
iii) the quantity of wash liquid which is supplied to the heat exchanger device (60) per unit time is not sufficient to heat the final rinse liquid to a predefined or predefinable minimum temperature.

8. Conveyor dishwasher (2) according to one of Claims 1 to 7,
wherein the wash tank (32, 34, 36) has a capacity of 20 to 200 litres, and the auxiliary tank (67) has a capacity of 10 to 50 litres; and/or wherein the conveyor dishwasher (2) further has a wastewater line (62) which forms or is able to form a flow connection with a wastewater system (63) and by means of which the wash liquid is discharged after the wash liquid has first passed the heat exchanger device (60); and/or wherein the heat exchanger device (60) has at least one counterflow heat exchanger.

9. Method for operating a conveyor dishwasher (2), according to one of Claims 1 to 8,
wherein at least a portion of the wash liquid which is produced as wastewater is at least temporarily supplied to a heat exchanger device (60) in which at least a portion of the thermal energy of the supplied wash liquid is transferred to the final rinse liquid which is to be sprayed in a final rinse zone (18) of the conveyor dishwasher (2).

10. Method according to Claim 9,
wherein the wash liquid is supplied as wastewater to a wastewater system (63) after passing the heat exchanger device (60) and/or
wherein the wash liquid is supplied to the heat exchanger device (60) cyclically and/or depending on a liquid level in the wash tank (32, 34, 36).

11. Method according to Claim 9 or 10,
wherein, when no wash liquid is supplied to the heat exchanger device (60) and/or when the thermal energy which is transferred to the quantity of final rinse liquid, which is to be sprayed in the final rinse zone (18), in the heat exchanger device (60) is not sufficient to heat the final rinse liquid to a predefined or predefinable minimum temperature, a boiler (9, 65) which operates independently of the heat exchanger device (60) is activated.

## Patentansprüche

1. Förderbandartiger Geschirrspüler (2) mit einer finalen Spülzone (18) und mindestens einer Waschzone (12, 14, 16, 18) und auch einer Förderbandvorrichtung zum Fördern von Waschware durch die Aufbereitungszonen des förderbandartigen Geschirrspülers (2), wobei der mindestens einen Waschzone (12, 14, 16, 18) ein Waschtank (32, 34, 36) zugeordnet ist, in dem mindestens ein Teil der Waschflüssigkeit, die in die mindestens eine Waschzone (12, 14, 16, 18) gesprüht wird, gesammelt wird, wobei der förderbandartige Geschirrspüler (2) ein Waschsystem aufweist, welches der mindestens einen Waschzone (12, 14, 16, 18) zugeordnet ist, und mindestens eine Waschpumpe (33, 35, 45) und Waschdüsen (26, 28, 30) aufweist, wobei Waschflüssigkeit aus dem Waschtank (32, 34, 36) mithilfe der mindestens einen Waschpumpe (33, 35, 45) den Waschdüsen (26, 28, 30) zugeführt werden kann, und wobei die Waschflüssigkeit, die mindestens teilweise in der mindestens einen Waschzone (12, 14, 16, 18) von den Waschdüsen (26, 28, 30) versprüht wird, aufgrund von Schwerkraft mindestens teilweise wieder in den Waschtank (32, 34, 36) zurückströmt,
**dadurch gekennzeichnet, dass**
der förderbandartige Geschirrspüler (2) eine Abwasserpumpe (61) aufweist, um bei Bedarf Waschflüssigkeit, die während des Betriebs des förderbandartigen Geschirrspülers (2) als Abwasser produziert wird, einer Wärmetauschervorrichtung (60) zuzuführen, in der mindestens ein Teil der thermischen Energie der zugeführten Waschflüssigkeit auf die finale Spülflüssigkeit übertragen wird, die in die finale Spülzone (18) zu sprühen ist, und dadurch, dass der förderbandartige Geschirrspüler (2) einen Zusatztank (67) aufweist, der mittels eines Überlaufs (68) oder mittels einer Umgehungsleitung eine Strömungsverbindung mit dem Waschtank (32, 34, 36) ausbildet, sodass die in der Waschzone (12, 14, 16, 18) als Abwasser produzierte Waschflüssigkeit den Zusatztank (67) erreicht und dort einer Zwischenlagerung unterzogen wird, wobei das Einlassende der Abwasserpumpe (61) eine direkte Strömungsverbindung mit dem Zusatztank (67) ausbildet.

2. Förderbandartiger Geschirrspüler (2) nach Anspruch 1,
wobei der förderbandartige Geschirrspüler (2) eine Steuervorrichtung (50) aufweist, die dazu ausgelegt ist, die Abwasserpumpe (61) in Abhängigkeit von einer Menge finaler Spülflüssigkeit, die aktuell pro Einheitszeit benötigt wird, und/oder einer Menge von Abwasser, das während des Betriebs des förderbandartigen Geschirrspülers (2) produziert wird, und/oder in Abhängigkeit von einem Flüssigkeitsstand des Zusatztanks oder von einem Flüssigkeitsstand in mindestens einem Waschtank (32, 34, 36) des förderbandartigen Geschirrspülers und/oder in Abhängigkeit von einem vordefinierten Ereignis und/oder in Abhängigkeit von einem Betriebszyklus und/oder Betriebsstatus des förderbandartigen Geschirrspülers (2) anzutreiben.

3. Förderbandartiger Geschirrspüler (2) nach Anspruch 1 oder 2,
wobei der förderbandartige Geschirrspüler (2) eine Steuervorrichtung (50) aufweist, die dazu ausgelegt ist, die Abwasserpumpe (61) abzuschalten, vorzugsweise die Abwasserpumpe automatisch abzuschalten, wenn der Flüssigkeitsstand in dem Waschtank (32, 34, 36) unter ein vordefiniertes oder vordefinierbares erstes Niveau fällt, und die Abwasserpumpe (61) wieder einzuschalten, vorzugsweise die Abwasserpumpe automatisch wieder einzuschalten, sobald der Flüssigkeitsstand in dem Waschtank (32, 34, 36) ein vordefiniertes oder vordefinierbares zweites Niveau überschreitet, wobei das erste Niveau vorzugsweise mit dem zweiten Niveau korrespondiert.

4. Förderbandartiger Geschirrspüler (2) nach Anspruch 2 oder 3,
wobei die Steuervorrichtung (50) dazu ausgelegt ist, bei Bedarf eine von der Wärmetauschervorrichtung (60) unabhängige Heißwasseraufbereitung der finalen Spülflüssigkeit zu initiieren, die in die finale Spülzone (18) zu sprühen ist, konkret insbesondere, wenn:
i) die thermische Energie, die auf die finale Spülflüssigkeit übertragen wird, welche in die finale Spülzone (18) zu sprühen ist, in der Wärmetauschervorrichtung (60) nicht ausreicht, um die finale Spülflüssigkeit auf eine vordefinierte oder vordefinierbare Minimaltemperatur zu erwärmen; und/oder
ii) der Wärmetauschervorrichtung (60) keine Waschflüssigkeit zugeführt wird; und/oder
iii) die Menge von Waschflüssigkeit, die der Wärmetauschervorrichtung (60) je Einheitszeit zugeführt wird, nicht ausreicht, um die finale Spülflüssigkeit auf eine vordefinierte oder vordefinierbare Minimaltemperatur zu erwärmen.

5. Förderbandartiger Geschirrspüler (2) nach einem der Ansprüche 2 bis 4, wobei der förderbandartige Geschirrspüler (2) einen Boiler (9, 65) aufweist, um bei Bedarf die finale Spülflüssigkeit, die in die finale Spülzone (18) zu sprühen ist, zu erwärmen, wobei die Steuervorrichtung (50) dazu ausgelegt ist, den Boiler (9, 65) zu aktivieren, wenn:
i) die thermische Energie, die auf die finale Spülflüssigkeit übertragen wird, welche in die finale Spülzone (18) zu sprühen ist, in der Wärmetauschervorrichtung (60) nicht ausreicht, um die finale Spülflüssigkeit auf eine vordefinierte oder vordefinierbare Minimaltemperatur zu erwärmen; und/oder
ii) der Wärmetauschervorrichtung (60) keine Waschflüssigkeit zugeführt wird; und/oder
iii) die Menge von Waschflüssigkeit, die der Wärmetauschervorrichtung (60) je Einheitszeit zugeführt wird, nicht ausreicht, um die finale Spülflüssigkeit auf eine vordefinierte oder vordefinierbare Minimaltemperatur zu erwärmen.

6. Förderbandartiger Geschirrspüler (2) nach Anspruch 5,
wobei der Boiler (9, 65) dazu ausgelegt ist, die finale Spülflüssigkeit, die in die finale Spülzone (18) zu sprühen ist, unter Verwendung von elektrischer Energie, Dampf, einer Wärmepumpe, Gas oder Heißwasser auf eine vordefinierte oder vordefinierbare Minimaltemperatur zu erwärmen.

7. Förderbandartiger Geschirrspüler (2) nach einem der Ansprüche 2 bis 6,
wobei ein externer Boiler bereitgestellt ist und der förderbandartige Geschirrspüler (2) mittels eines Heißwasseranschlusses (66) eine Strömungsverbindung mit dem externen Boiler ausbildet oder ausbilden kann, um bei Bedarf Heißwasser als die finale Spülflüssigkeit zuzuführen, die in die finale Spülzone (18) zu sprühen ist, wobei die Steuervorrichtung (50) dazu ausgelegt ist, den Heißwasseranschluss (66) zu aktivieren, wenn:
i) die thermische Energie, die auf die finale Spülflüssigkeit übertragen wird, welche in die finale Spülzone (18) zu sprühen ist, in der Wärmetauschervorrichtung (60) nicht ausreicht, um die finale Spülflüssigkeit auf eine vordefinierte oder vordefinierbare Minimaltemperatur zu erwärmen; und/oder
ii) der Wärmetauschervorrichtung (60) keine Waschflüssigkeit zugeführt wird; und/oder
iii) die Menge von Waschflüssigkeit, die der Wärmetauschervorrichtung (60) je Einheitszeit zugeführt wird, nicht ausreicht, um die finale Spülflüssigkeit auf eine vordefinierte oder vordefinierbare Minimaltemperatur zu erwärmen.

8. Förderbandartiger Geschirrspüler (2) nach einem der Ansprüche 1 bis 7, wobei der Waschtank (32, 34, 36) eine Kapazität von 20 bis 200 Litern aufweist, und der Zusatztank (67) eine Kapazität von 10 bis 50 Litern aufweist; und/oder
wobei der förderbandartige Geschirrspüler (2) ferner eine Abwasserleitung (62) aufweist, die eine Strömungsverbindung mit einem Abwassersystem (63) ausbildet oder ausbilden kann, und mittels der die Waschflüssigkeit abgelassen wird, nachdem die Waschflüssigkeit zuerst die Wärmetauschervorrichtung (60) passiert hat; und/oder
wobei die Wärmetauschervorrichtung (60) mindestens einen Gegenstromwärmetauscher aufweist.

9. Verfahren zum Betreiben eines förderbandartigen Geschirrspülers (2) nach einem der Ansprüche 1 bis 8,
wobei mindestens ein Teil der Waschflüssigkeit, die als Abwasser produziert wird, mindestens zeitweilig einer Wärmetauschervorrichtung (60) zugeführt wird, in der mindestens ein Teil der thermischen Energie der zugeführten Waschflüssigkeit auf die finale Spülflüssigkeit übertragen wird, die in eine finale Spülzone (18) des förderbandartigen Geschirrspülers (2) zu sprühen ist.

10. Verfahren nach Anspruch 9,
wobei die Waschflüssigkeit nach dem Passieren der Wärmetauschervorrichtung (60) als Abwasser einem Abwassersystem (63) zugeführt wird, und/oder
wobei die Waschflüssigkeit der Wärmetauschervorrichtung (60) zyklisch und/oder abhängig von einem Flüssigkeitsstand in dem Waschtank (32, 34, 36) zugeführt wird.

11. Verfahren nach Anspruch 9 oder 10,
wobei dann, wenn der Wärmetauschervorrichtung (60) keine Waschflüssigkeit zugeführt wird, und/oder wenn die thermische Energie, die an die Quantität der finalen Spülflüssigkeit, welche in die finale Spülzone (18) zu sprühen ist, übertragen wird, in der Wärmetauschervorrichtung (60) nicht ausreicht, um die finale Spülflüssigkeit auf eine vordefinierte oder vordefinierbare Minimaltemperatur zu erwärmen, ein Boiler (9, 65) aktiviert wird, der unabhängig von der Wärmetauschervorrichtung (60) operiert.

## Revendications

1. Lave-vaisselle à bande transporteuse (2) présentant une zone de rinçage final (18) et au moins une zone de lavage (12, 14, 16, 18) ainsi qu'un appareil à bande transporteuse pour transporter la vaisselle à travers les zones de traitement du lave-vaisselle à bande transporteuse (2), l'au moins une zone de lavage (12, 14, 16, 18) ayant un réservoir de lavage associé (32, 34, 36) dans lequel est recueillie au moins une partie du liquide de lavage qui est pulvérisé dans l'au moins une zone de lavage (12, 14, 16, 18), le lave-vaisselle à bande transporteuse (2) présentant un système de lavage qui est associé à l'au moins une zone de lavage (12, 14, 16, 18) et présentant au moins une pompe de lavage (33, 35, 45) et des buses de lavage (26, 28, 30), du liquide de lavage provenant du réservoir de lavage (32, 34, 36) pouvant être acheminé aux buses de lavage (26, 28, 30) à l'aide de l'au moins une pompe de lavage (33, 35, 45), et le liquide de lavage qui est pulvérisé dans l'au moins une zone de lavage (12, 14, 16, 18) par les buses de lavage (26, 28, 30) s'écoulant au moins en partie à nouveau dans le réservoir de lavage (32, 34, 36) sous l'effet de la gravité,
**caractérisé en ce que**
le lave-vaisselle à bande transporteuse (2) présente une pompe d'eaux usées (61) pour fournir du liquide de lavage qui est produit sous forme d'eaux usées lors du fonctionnement du lave-vaisselle à bande transporteuse (2), selon les besoins, à un dispositif échangeur de chaleur (60) dans lequel au moins une partie de l'énergie thermique du liquide de lavage acheminé est transférée au liquide de rinçage final qui doit être pulvérisé dans la zone de rinçage final (18), et **en ce que** le lave-vaisselle à bande transporteuse (2) présente un réservoir auxiliaire (67) qui forme une connexion d'écoulement avec le réservoir de lavage (32, 34, 36) au moyen d'un trop-plein (68) ou au moyen d'une conduite de dérivation de telle sorte que le liquide de lavage qui est produit sous forme d'eaux usées dans la zone de lavage (12, 14, 16, 18) atteigne le réservoir auxiliaire (67) et soit soumis dans celui-ci à un stockage intermédiaire, l'extrémité d'admission de la pompe d'eaux usées (61) formant une connexion d'écoulement directe avec le réservoir auxiliaire (67).

2. Lave-vaisselle à bande transporteuse (2) selon la revendication 1, le lave-vaisselle à bande transporteuse (2) présentant un dispositif de commande (50) qui est conçu pour entraîner la pompe d'eaux usées (61) en fonction d'une quantité de liquide de rinçage final qui est requise actuellement par unité de temps et/ou d'une quantité d'eaux usées qui est produite au cours du fonctionnement du lave-vaisselle à bande transporteuse (2) et/ou en fonction d'un niveau de liquide du réservoir auxiliaire, ou d'un niveau de liquide dans au moins un réservoir de lavage (32, 34, 36) du lave-vaisselle à bande transporteuse et/ou en fonction d'un événement prédéfini et/ou en fonction d'un cycle de fonctionnement et/ou d'un état de fonctionnement du lave-vaisselle à bande transporteuse (2).

3. Lave-vaisselle à bande transporteuse (2) selon la revendication 1 ou 2, le lave-vaisselle à bande transporteuse (2) ayant un dispositif de commande (50) qui est conçu pour arrêter la pompe d'eaux usées (61), de préférence arrêter automatiquement ladite pompe d'eaux usées lorsque le niveau de liquide dans le réservoir de lavage (32, 34, 36) tombe en dessous d'un premier niveau prédéfini ou prédéfinissable, et pour mettre en marche la pompe d'eaux usées (61) à nouveau, de préférence pour mettre en marche automatiquement ladite pompe d'eaux usées à nouveau dès que le niveau de liquide dans le réservoir de lavage (32, 34, 36) dépasse un deuxième niveau prédéfini ou prédéfinissable, le premier niveau correspondant de préférence au deuxième niveau.

4. Dispositif à bande transporteuse (2) selon la revendication 2 ou 3, dans lequel le dispositif de commande (50) est conçu pour amorcer, selon les besoins, un traitement à l'eau chaude, qui est indépendant du dispositif échangeur de chaleur (60), du liquide de rinçage final qui doit être pulvérisé dans la zone de rinçage final (18), en particulier spécifiquement lorsque :
i) l'énergie thermique qui est transférée au liquide de rinçage final qui doit être pulvérisé dans la zone de rinçage final (18) dans le dispositif échangeur de chaleur (60) ne suffit pas pour chauffer le liquide de rinçage final à une température minimale prédéfinie ou prédéfinissable ; et/ou
ii) aucun liquide de lavage n'est fourni au dispositif échangeur de chaleur (60) ; et/ou
iii) la quantité de liquide de lavage qui est fournie au dispositif échangeur de chaleur (60) par unité de temps n'est pas suffisante pour chauffer le liquide de rinçage final à une température minimale prédéfinie ou prédéfinissable.

5. Lave-vaisselle à bande transporteuse (2) selon l'une des revendications 2 à 4, le lave-vaisselle à bande transporteuse (2) présentant une chaudière (9, 65) pour chauffer au besoin le liquide de rinçage final qui doit être pulvérisé dans la zone de rinçage final (18), le dispositif de commande (50) étant conçu pour activer la chaudière (9, 65) lorsque :
i) l'énergie thermique qui est transférée au liquide de rinçage final qui doit être pulvérisé dans la zone de rinçage final (18) dans le dispositif échangeur de chaleur (60) n'est pas suffisante pour chauffer le liquide de rinçage final à une température minimale prédéfinie ou prédéfinissable ; et/ou
ii) aucun liquide de lavage n'est fourni au dispositif échangeur de chaleur (60) ; et/ou
iii) la quantité de liquide de lavage qui est fournie au dispositif échangeur de chaleur (60) par unité de temps n'est pas suffisante pour chauffer le liquide de rinçage final à une température minimale prédéfinie ou prédéfinissable.

6. Lave-vaisselle à bande transporteuse (2) selon la revendication 5, dans lequel la chaudière (9, 65) est conçue pour chauffer le liquide de rinçage final qui doit être pulvérisé dans la zone de rinçage final (18) à une température minimale prédéfinie ou prédéfinissable en utilisant de l'énergie électrique, de la vapeur, une pompe à chaleur, du gaz ou de l'eau chaude.

7. Lave-vaisselle à bande transporteuse (2) selon l'une des revendications 2 à 6, dans lequel une chaudière extérieure est prévue, le lave-vaisselle à bande transporteuse (2) formant ou pouvant former une connexion d'écoulement avec ladite chaudière extérieure au moyen d'une connexion d'eau chaude (66) pour fournir, selon les besoins, de l'eau chaude sous forme de liquide de rinçage final qui doit être pulvérisé dans la zone de rinçage final (18), le dispositif de commande (50) étant conçu pour activer la connexion d'eau chaude (66) lorsque :
i) l'énergie thermique qui est transférée au liquide de rinçage final qui doit être pulvérisé dans la zone de rinçage final (18) dans le dispositif échangeur de chaleur (60) n'est pas suffisante pour chauffer le liquide de rinçage final à une température minimale prédéfinie ou prédéfinissable ; et/ou
ii) aucun liquide de lavage n'est fourni au dispositif échangeur de chaleur (60) ; et/ou
iii) la quantité de liquide de lavage qui est fournie au dispositif échangeur de chaleur (60) par unité de temps n'est pas suffisante pour chauffer le liquide de rinçage final à une température minimale prédéfinie ou prédéfinissable.

8. Lave-vaisselle à bande transporteuse (2) selon l'une des revendications 1 à 7, dans lequel le réservoir de lavage (32, 34, 36) présente une capacité de 20 à 200 litres, et le réservoir auxiliaire (67) présente une capacité de 10 à 50 litres ; et/ou le lave-vaisselle à bande transporteuse (2) comprend en outre une conduite d'eaux usées (62) qui forme ou peut former une connexion d'écoulement avec un système d'eaux usées (63) et au moyen de laquelle le liquide de lavage est déchargé après que le liquide de lavage est d'abord passé par le dispositif échangeur de chaleur (60) ; et/ou dans lequel le dispositif échangeur de chaleur (60) présente au moins un échangeur de chaleur à contre-courant.

9. Procédé de fonctionnement d'un lave-vaisselle à bande transporteuse (2) selon l'une des revendications 1 à 8, dans lequel au moins une partie du liquide de lavage qui est produit en tant qu'eaux usées est au moins fournie temporairement à un dispositif échangeur de chaleur (60) dans lequel au moins une partie de l'énergie thermique du liquide de lavage fourni est transférée au liquide de rinçage final qui doit être pulvérisé dans une zone de rinçage final (18) du lave-vaisselle à bande transporteuse (2).

10. Procédé selon la revendication 9, dans lequel le liquide de lavage est fourni sous forme d'eaux usées à un système d'eaux usées (63) après être passé par le dispositif échangeur de chaleur (60) et/ou dans lequel le liquide de lavage est fourni au dispositif échangeur de chaleur (60) sous forme cyclique et/ou en fonction d'un niveau de liquide dans le réservoir de lavage (32, 34, 36).

11. Procédé selon la revendication 9 ou 10, dans lequel, lorsqu'aucun liquide de lavage n'est fourni au dispositif échangeur de chaleur (60) et/ou lorsque l'énergie thermique qui est transférée à la quantité de liquide de rinçage final qui doit être pulvérisé dans la zone de rinçage final (18) dans le dispositif échangeur de chaleur (60) n'est pas suffisante pour chauffer le liquide de rinçage final à une température minimale prédéfinie ou prédéfinissable, une chaudière (9, 65) qui fonctionne indépendamment du dispositif échangeur de chaleur (60) est activée.
